# EUROPEAN PATENT APPLICATION

(11) **EP 3 806 543 A1**
(43) Date of publication of application: **14.04.2021**
(21) Application number: 19812424.0
(22) Date of filing: 29.01.2019
(51) Int. Cl.: H04W 40/36

(54) **BASE STATION DEVICE IN WIRELESS COMMUNICATION SYSTEM IN WHICH HANDOVER INCLUDING RELAY TRANSMISSION PATH IS EXECUTED, CONTROL METHOD FOR SAME, AND PROGRAM**

(30) Priority: 01.06.2018 JP 2018105972
(71) Applicant: KDDI Corporation, Tokyo 163-8003 (JP)
(72) Inventor: PENG, Hailan, Saitama 356-8502 (JP); OHSEKI, Takeo, Saitama 356-8502 (JP); SUEGARA, Yasuhiro, Saitama 356-8502 (JP)
(74) Representative: Pitchford, James Edward
(86) International application number: PCT/JP2019/002837
(87) International publication number: WO 2019/230044

(57) **Abstract**

A base station device, which provides a terminal device with communication via a relay device or direct communication, selects a communication path between the terminal device and a core network when the terminal device executes handover, and provides a notification regarding the handover executed by the terminal device, to each of one or more devices that constitute the selected communication path. A connection between the terminal device and the core network is established based on the notification, using the selected communication path.

## Description

### TECHNICAL FIELD

The present invention relates to a base station device, a control method for the same, and a program, and particularly relates to a technique for perform control when executing handover that involves a relay transmission path.

### BACKGROUND ART

In recent years, a type of cellular communication system has been studied in which a terminal device does not directly connect to a base station that is connected to a core network, but connects to a relay device that relays communication with the base station (see NPL1).

### CITATION LIST

### NON PATENT LITERATURE

NPL1: 3GPP TR 36.806, V9.0.0, March, 2010

### SUMMARY OF INVENTION

### TECHNICAL PROBLEM

Mobility management for terminal devices is also important in a system that employs relay transmission paths of terminal devices. However, in such a system, it is not clear how the terminal devices should execute handover processing. In particular, when a terminal device switches the connection destination from one relay device to another relay device, if a relay path is not appropriately set, inconveniences such as a decrease in communication speed may occur, and, in some cases, communication may be disabled.

### SOLUTION TO PROBLEM

The present invention provides handover procedures that are suitable for a cellular communication system that employs a relay transmission path.

A base station device according to one aspect of the present invention is a base station device that provides a terminal device with communication via a relay device or direct communication, characterized in that the base station device includes: selection means for selecting a communication path between the terminal device and a core network when the terminal device executes handover; and notification means for providing a notification regarding the handover executed by the terminal device, to each of one or more devices that constitute the communication path selected by the selection means, and a connection between the terminal device and the core network is established based on the notification, using the communication path selected by the selection means.

### ADVANTAGEOUS EFFECTS OF INVENTION

According to the present invention, it is possible to appropriately complete handover processing executed by terminal devices in a cellular communication system that employs a relay transmission path.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example of a configuration of a wireless communication system.
FIG. 2 is a diagram showing an example of a device configuration of a base station device.
FIG. 3 is a diagram showing an example of a functional configuration of a base station device.
FIG. 4 is a diagram showing an example of a flow of processing executed by a system.
FIG. 5 is a diagram showing an example of a flow of processing executed by a system.
FIG. 6 is a diagram showing an example of a flow of processing executed by a system.
FIG. 7 is a diagram showing an example of a flow of processing executed by a system.

### DESCRIPTION OF EMBODIMENTS

The following describes an embodiment of the present invention in detail with reference to the drawings.

### System Configuration

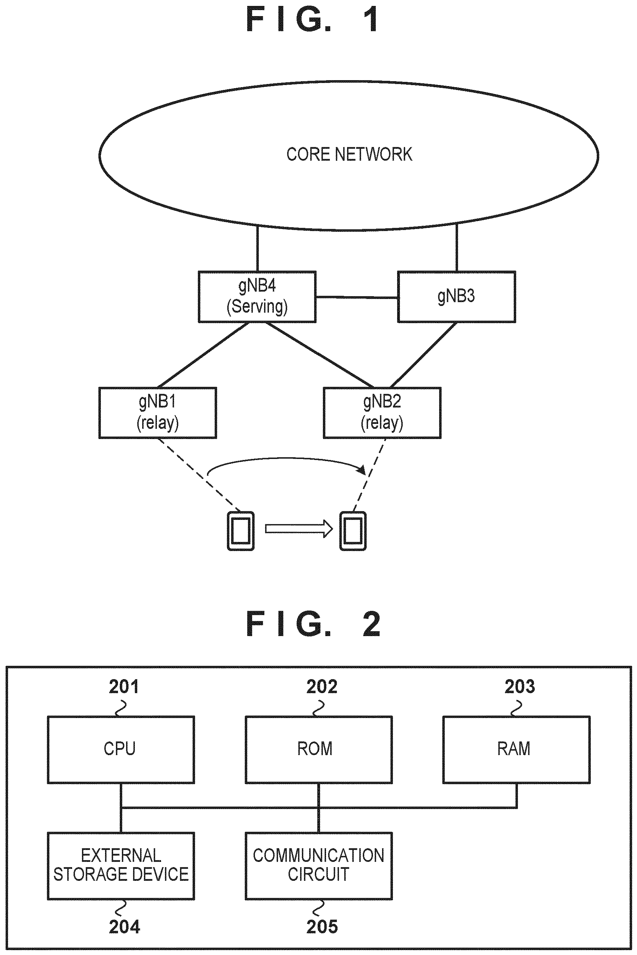

FIG. 1 shows an example of a configuration of a wireless communication system according to the present embodiment. In one example, the wireless communication system is an LTE (Long Term Evolution) system or a fifth-generation or later cellular communication system. However, the present invention is not limited to these systems, and the following is applicable to any wireless communication system that has a similar configuration and switches between communication paths that terminal devices use to execute communication.

The wireless communication system includes relay devices (gNB1 and gNB2 in FIG. 1). A relay device connects to another relay device or a base station device, and relays communication between terminal devices. Note that the connection between a relay device and another relay device or a base station device may be a wired connection or a wireless connection. Although gNB1 and gNB2 can be recognized by a terminal device as relay devices (i.e. another device at the relay destination can be recognized as a base station device at the connection destination), gNB1 and gNB2 may be recognized as a base station device that is similar to another base station device that does not perform relay operations. Also, although terminal devices in the following description are described as devices that connect to relay devices, terminal devices may connect to a base station device such as gNB3 or gNB4 that directly connects to a core network and does not operate as a relay device. Note that "directly connects to a core network" mentioned here means to connect to the core network via a communication path that does not include a relay device that terminal devices can connect. That is to say, in FIG. 1, gNB3 and gNB4 are base station devices that directly connect to the core network, and gNB1 and gNB2 are relay devices that are not directly connected to the core network, from this point of view. Such a base station device that directly connects to the core network may have a relay function. For example, gNB3 has a relay function of relaying communication between gNB4 and a terminal device, and a function of directly communicating with the core network. gNB4 has similar functions. Note that gNB1 and gNB2 can also be classified as base station devices, these devices may be referred to as relay devices in this embodiment except when particularly necessary.

In the present embodiment, a terminal device connects to gNB4 via gNB1 that serves as a relay device. Here, gNB4 is a base station device that is directly connected to the core network as described above, and has a mobility management function, for example. In one example, such a base station device that has a mobility management function serves as a serving base station for a terminal device. That is to say, while the terminal device directly connects to gNB1, if gNB1 does not have the mobility management function, the serving base station for the terminal device is gNB4 that has the mobility management function. Note that terminal devices may directly connect to gNB4 according to the intensity of radio waves, for example. That is to say, it is not absolutely necessary to use relay communication paths.

In the present embodiment, as shown in FIG. 1, the terminal device in the state of connecting to gNB1 moves to an area that is developed by gNB2, and handover to gNB2 is executed. At this time, the relay communication path from the terminal device to the core network is (1) gNB2 → gNB4 → core network, (2) gNB2 → gNB3 → core network, or (3) gNB2 → gNB3 → gNB4 → core network. One of these communication paths may be selected so that a base station device that supports the service requested by the terminal device serves as a serving base station, for example. For example, if gNB3 does not support the service requested by the terminal device, the communication path (1) or (3) may be selected so that gNB4 serves as a serving base station. Alternatively, the communication path may be selected according to the load on each base station device and each relay device, for example. That is to say, a communication path that includes a base station device or a relay device under heavy load may not be selected. In this way, in a system that employs relay communication, it is important to select what communication path is to be used, and to appropriately set the communication path at the time of handover.

Therefore, in one example, the serving base station before handover (gNB4) acquires, via gNB1, the result of measurement of the wireless quality in a terminal device, and determines whether or not the terminal device should execute handover according to the result of measurement. Note that the serving base station transmits, to a terminal device, information that specifies a base station device or a relay device that can provide wireless communication service in an area where the terminal device may move so that the terminal device measures the wireless quality of radio signals from such a device, for example. That is to say, the serving base station notifies the terminal device of information that specifies a candidate for a handover destination device as a measurement target device. Upon acquiring information regarding the result of measurement from the terminal device, the serving base station determines a handover destination device. For example, gNB4 selects gNB2 as the handover destination. Also, the serving base station determines a communication path between this handover destination device and the core network. For example, gNB4 selects one of the communication paths (1) to (3) described above, based on predetermined criteria such as the service requested by the terminal device and loads on devices. Thereafter, the serving base station requests handover of the devices included in the determined communication path (e.g. gNB2 and gNB3), and switches communication paths upon such a request being accepted. Thus, an appropriate communication path is selected when a terminal device moves, and the terminal device can continue communication in a system that includes a relay device.

In another example, the serving base station (gNB4) may provide information regarding a base station device or a relay device that can be a candidate for a handover destination so that the terminal device can autonomously execute handover. In this case, the terminal device may autonomously start handover procedures using the information thus provided, upon wireless quality falling below a predetermined value, for example. In this case, the terminal device starts handover processing without an instruction from the serving base station, and therefore gNB2, which is the handover destination, may determine the communication path to the core network, for example. gNB2 holds information regarding one or more candidates for communication paths from gNB2 to the core network, for example, and selects one communication path from the candidates based on predetermined criteria such as the service requested by the terminal device and loads on devices. Thereafter, gNB2 requests handover of the devices included in the selected communication path (e.g. gNB3 and gNB4), and switches communication paths upon such a request being accepted. Thus, an appropriate communication path is selected when a terminal device moves, and the terminal device can continue communication in a system that includes a relay device. In this case, the serving base station may select, in advance, a base station device or a relay device that can be a candidate for the handover destination, according to the service requested by the terminal device, and transmit information regarding the selected device to the terminal device. For example, when gNB3 can provide the service requested by the terminal device whereas gNB4 cannot provide the service, the terminal device need not be notified of information regarding a relay device or the like that does not have a communication path that connects to gNB3.

Also, a relay device that does not have the mobility management function, upon establishing a connection with a terminal device as a result of autonomous handover by the terminal device, may notify another base station device that has the mobility management function of the fact that the terminal device has attempted to connect thereto. In such a case, the base station device that has the mobility management function may determine the communication path that is suitable for the terminal device, and may transmit a handover request to the devices included in the communication path. Note that relay devices may have information regarding a default route that is used when notifying a base station device that has the mobility management function of the fact that a terminal device has attempted to execute handover to connect thereto. That is to say, a relay device, when a terminal device has attempted to execute handover to connect thereto, transmit a notification that includes information regarding the terminal device, for example, directly to a predetermined base station device that has the mobility management function, or to another relay device that transfer information to the base station device. As a result, even if the relay device does not hold information regarding the communication path, it is possible to select and set a communication path that is suitable for the terminal device. Note that, upon determining that it is impossible to execute the service requested by the terminal device in the case of connecting to the relay device from which the notification has been transmitted, the base station device that has the mobility management function may specify the handover destination that can execute the service when instructing the terminal device to execute handover.

The following describes an example of a base station device (a relay device) that executes the above-described operations, and an example of the flow of processing that is to be executed. Note that, in the following description, base station devices and relay devices are both referred to as "base station devices" when they need not be distinguished from each other.

### Hardware Configuration

FIG. 2 shows an example of a hardware configuration of a base station device. In one example, the base station device has a hardware configuration shown in FIG. 2, and includes a CPU 201, a ROM 202, a RAM 203, an external storage device 204, and a communication circuit 205. In the base station device, for example, a program that is stored in any one of the ROM 202, the RAM 203, and the external storage device 204, and realizes the functions of the base station device as described above, is executed by the CPU 201.

Thereafter, the base station device controls the communication circuit 205, using the CPU 201, for example, to communicate with another device. Note that the communication circuit 205 can communicate with another base station device or another network node via a wired network, for example, and can wirelessly communicate with a terminal device by forming one or more (a plurality of) beams. Although FIG. 2 is a schematic diagram showing that the base station device includes one communication circuit 205, the base station device is not limited to such a configuration and may include a plurality of communication circuits. For example, the base station device may include a first communication circuit for wired communication with another base station device, and a second communication circuit for a wireless communication with a terminal device.

Note that the base station device may include dedicated hardware for executing each of the functions, or execute some of the functions using hardware, and executing other functions by using a computer that runs a program. Alternatively, all of the functions may be executed by a computer and a program.

### Functional Configuration

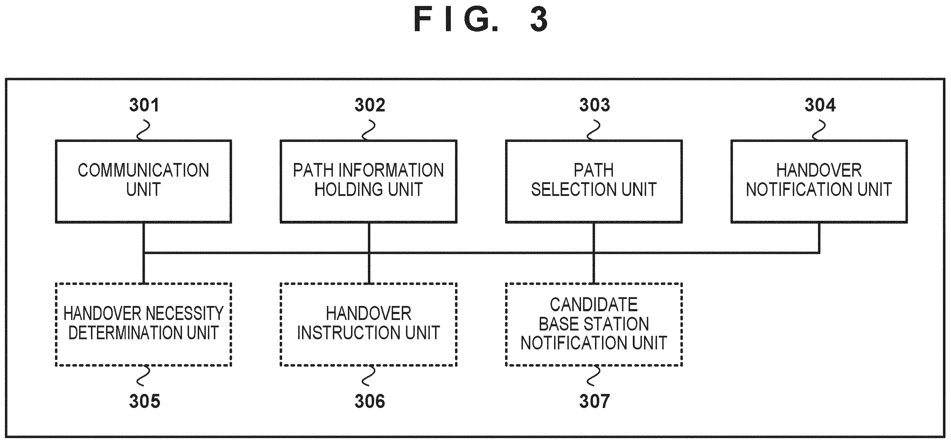

FIG. 3 shows an example of a functional configuration of the base station device. The base station device includes, as examples of functional components thereof, a communication unit 301, a path information holding unit 302, a path selection unit 303, and a handover notification unit 304. Also, the base station device may include a handover necessity determination unit 305 and a handover instruction unit 306 as components for instructing a terminal device to execute handover. Also, the base station device may include a candidate base station notification unit 307 as a component for cases in which a terminal device autonomously executes handover. The base station device may include either one or both of: the handover necessity determination unit 305 and the handover instruction unit 306; and the candidate base station notification unit 307. Alternatively, the base station device may include neither of them, and a control device that only performs control regarding a communication path may be configured as shown in FIG. 3. In such a case, the base station device need not have the functions of a base station device. That is to say, a network node that includes the communication unit 301, the path information holding unit 302, the path selection unit 303, and the handover notification unit 304 may be prepared separately from the base station device, and such a network node may be configured to receive a notification indicating that handover is to be performed, from a base station device or a relay device, and execute processing to determine a communication path.

The communication unit 301 executes wired/wireless communication with another base station device (relay device), or execute wireless communication with a terminal device that is currently connected thereto.

The path information holding unit 302 holds information regarding available communication paths between relay devices and the core network, for example. For example, regarding gNB2, the path information holding unit 302 holds information regarding three communication paths, namely (1) gNB2 → gNB4 → core network, (2) gNB2 → gNB3 → core network, and (3) gNB2 → gNB3 → gNB4 → core network. For example, when the terminal device autonomously executes handover, each of the base station and relay devices that can connect to the terminal device may only hold information regarding communication paths from the device itself to the core network. For example, the path information holding unit 302 of gNB2 may only hold information regarding the above three communication paths. On the other hand, when the base station device instructs the terminal device to execute handover, the path information holding unit 302 holds the above-described path information regarding base station devices or relay devices that can be the destination of the handover executed by the terminal device. For example, gNB1 is present as a candidate for the handover destination of the terminal device that is connected to gNB2, and therefore gNB4 may hold information regarding two communication paths, namely (1) gNB1 → gNB4 → the core network and (2) gNB1 → 4 → gNB3 → the core network, as information regarding communication paths for gNB1. Also, gNB2 is present as a candidate for the handover destination of the terminal device that is connected to gNB1, and therefore gNB4 may hold information regarding the above-described three communication paths as information regarding communication paths for gNB2.

The path selection unit 303 selects the communication path to be used for the terminal device that executes handover, from the path information held by the path information holding unit 302. For example, the path selection unit 303 selects a communication path so that a base station device that supports the service requested by the terminal device serves as a serving base station. Note that the serving base station may be notified by the terminal device of the service requested by the terminal device when the terminal device connects to the network, for example. For example, if gNB4 supports the service requested by the terminal device, but gNB3 does not, the path selection unit 303 may select a communication path with which gNB4 serves as the serving base station (e.g. a communication path with which gNB4 directly connects to the core network) as a communication path for the terminal device. If both gNB3 and gNB4 support the service requested by the terminal device and the load on gNB4 is high, the path selection unit 303 may select a communication path with which gNB3 serves as the serving base station, as a communication path for the terminal device. Also, upon selecting gNB4 as a serving base station, for example, if the communication path between gNB3 and gNB4 is a wired communication path or the like that has a sufficient communication capacity, and the usage rate of the wireless resource of gNB4 is no less than a predetermined level, the path selection unit 303 may select a communication path that reaches gNB4 via gNB3, instead of selecting a communication path that passes through the relay device that wirelessly connects to gNB4. If the allowable delay time of the service requested by the terminal device is within a predetermined time, the path selection unit 303 may select a communication path that minimizes the delay. Note that the above-described criteria and processing for path selection are examples, and a communication path may be appropriately selected according to any criterion.

The handover request unit 304 requests that the base station devices and the relay devices included in the communication path selected by the path selection unit 303 should change the communication path according to the handover executed by the terminal device. The handover request unit 304 may transmit a request signal to all the base station devices and the relay devices included in the communication path selected by the path selection unit 303, or to devices that are included in a part of the communication path that is different from the communication path before handover, for example. For example, when a communication path that includes base station device A, relay device B, relay device C, and relay device D is switched to a communication path that includes base station device A, relay device B, relay device C, and relay device E, a handover request may be transmitted to only relay device C and relay device E. That is to say, the request need not be transmitted to the devices included in the unchanged part of the path. This is because such devices are obviously allowed to establish the communication path from when handover has not been executed, despite such a request being not transmitted. The devices that have received the handover request performs determination and control regarding whether or not to accept the handover request, and return an ACK (a positive response) when accepting the request, and return a NACK (a negative response) when not accepting the request. Upon receiving a NACK, the handover request unit 304 notifies the path selection unit 303 of the reception. Upon receiving the notification of reception of a NACK, the path selection unit 303 re-selects a communication path. Thereafter, the handover request unit 304 transmits a handover request to the base station devices and the relay devices included in the re-selected communication path. Thus, the communication path after handover is established.

In one example, the handover necessity determination unit 305 acquires wireless quality information regarding radio signals from the base station devices (relay devices) in the vicinity of the terminal device, measured by the terminal device, and determines whether or not the terminal device should execute handover. Upon the handover request determination unit 305 determining that the terminal device should execute handover, the handover instruction unit 306 transmits a handover instruction to the terminal device. The processing performed by the handover necessity determination unit 305 and the handover instruction unit 306 is typical handover necessity determination processing, and will not be described in detail. However, in one example, the handover instruction unit 306, which includes information that specifies the base station device (the relay device) to which the terminal device should directly connects after handover in the handover instruction signal, may include not only information regarding the base station device (the relay device) to which the terminal device should directly connects, but also information regarding a communication path after handover, in the handover instruction signal. Note that information regarding a communication path may be information regarding the base station device and the relay device included in the communication path, for example, but may be other information such as information regarding the serving base station. The handover instruction signal may be an RRC Connection Reconfiguration message, for example, but may be another message.

The candidate base station notification unit 307 provides the terminal device with information regarding the base station devices (relay devices) that are handover candidates. This information enables the terminal device to autonomously determine the handover destination and execute connection switching processing. The candidate base station notification unit 307 specifies a communication path that includes the serving base station that supports the service requested by the terminal device, and notifies the terminal device of information regarding the base station device (the relay device) that is to directly connect to the terminal device on the communication path, for example. Thus, the terminal device can avoid executing handover to a base station device that does not support the service requested by the terminal device, or a relay device that can only connect to such a base station device.

Note that the above-described configuration is merely an example, and part of the above-described configuration may be omitted, or the entire configuration may be replaced with another configuration as long as the processing described below can be executed.

### Processing Flow

Next, an example of the flow of the processing executed by the wireless communication system that includes base station devices (relay devices) as described above. Note that the following describes an example of the flow of the processing in a case where the terminal device moves in a state where gNB4 is the serving base station and is connected to the terminal device via gNB1 (a relay device), and the terminal device executes handover to gNB2.

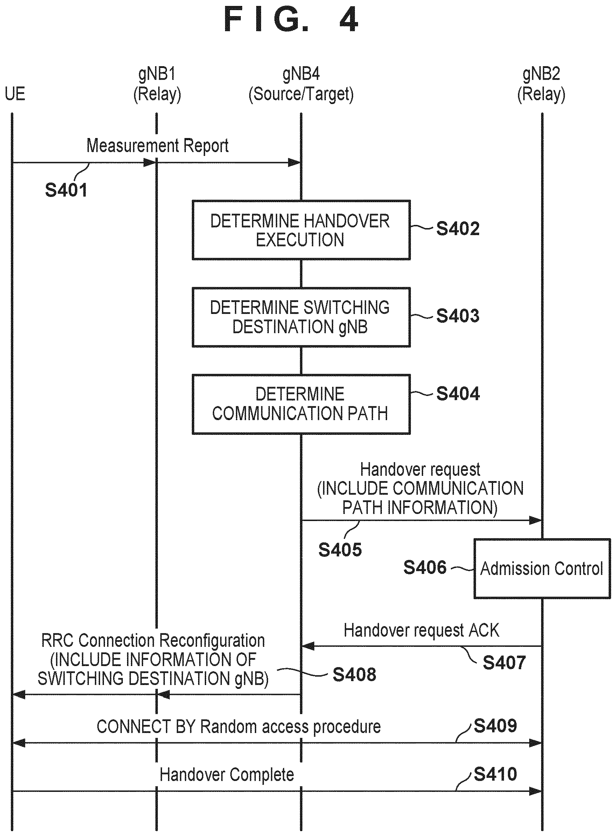

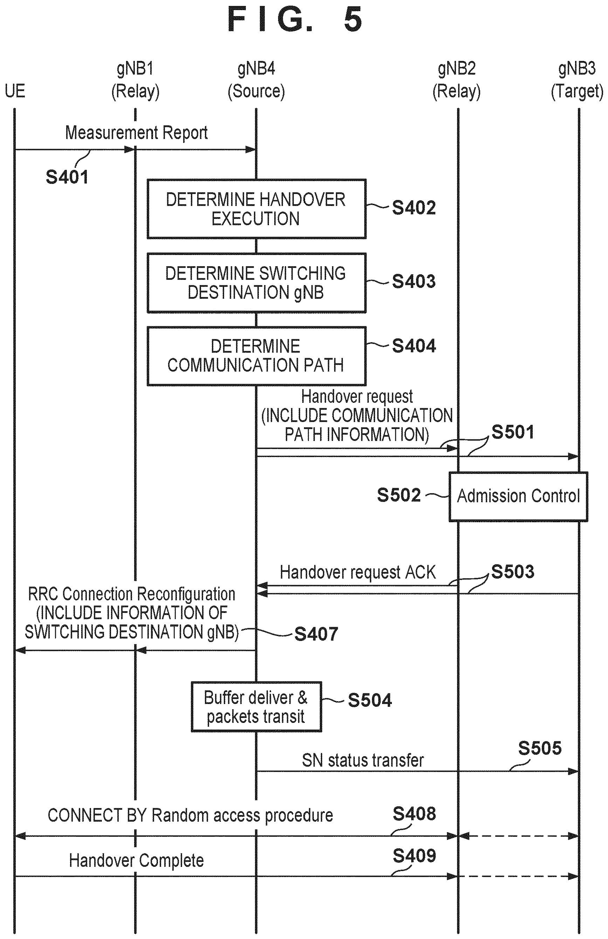

FIGS. 4 and 5 show an example of the flow of the processing performed when gNB4 (the serving base station) instructs the terminal device to execute handover. Note that FIG. 4 shows an example in which the communication path after handover includes a path that connects gNB2 and gNB4, and the serving base station is not changed, and FIG. 5 shows an example in which the communication path after handover is a path that connects gNB2 and gNB3, and the serving base station is switched to gNB3.

First, upon the wireless quality of radio signals from gNB1 that the terminal device is currently connected degrading, the terminal device (UE) measures the wireless quality of the radio signals regarding cells in the vicinity of the terminal device, and reports the result of measurement to gNB4, which is the serving base station, via gNB1 (S401). Note that the terminal device is notified by gNB4 of the cells on which the terminal device performs measurement, via gNB1, for example, and the terminal device reports the result of measurement regarding the cells specified by gNB4. Upon receiving the measurement report, gNB4 determines whether or not the terminal device should execute handover, based on the measurement report (S402), and upon determining that it is necessary to execute handover, gNB4 determines a gNB that will be the handover destination (S403). Thereafter, gNB4 determines the communication path from the core network (or the serving base station) to the gNB that is the handover destination (S404). In one example, the communication path is determined based on the service requested by the terminal device, the state of the load on the base station device, and so on, as described above. In the example shown in FIG. 4, the communication path from gNB2 that is the handover destination to gNB4 that is the serving base station is selected. In this case, gNB4 transmits a handover request to gNB2 (S405). At this time, the handover request includes information regarding the communication path. Information regarding the communication path includes at least information regarding a neighbor base station device or a neighbor relay device in the communication path. That is to say, the handover request transmitted to gNB2 includes at least information regarding gNB4. Such information is transmitted to each of the devices included in the communication path, and thus each relay device can discern the device from which the signal from the terminal device is received, and the device to which the received signal is to be transmitted. Upon receiving the handover request, gNB2 performs Admission Control to determine whether or not to accept the request (S406). Upon determining to accept the request, gNB2 transmits a positive response to gNB4 (S407). Upon receiving the positive response from a device that is included in the communication path determined in S404, gNB4 transmits a message that instructs to execute handover, to the terminal device (S408). This message includes at least information regarding the gNB that is the handover destination (gNB2 in this case). Upon receiving the message that instructs to execute handover, the terminal device establishes a connection with gNB2 that is specified, using random access procedures (S409), and transmits a message indicating the completion of the handover to gNB2, and terminates handover processing (S410).

In FIG. 5, processing is basically the same. However, in the example in FIG. 5, the serving base station is switched to another, and processing is different from that in FIG. 4 in this point. The processing in S401 to S404 is the same as in FIG. 4. In this example, the gNB that is the handover destination is gNB2, which is the same as in FIG. 4. However, the serving base station is switched to gNB3, and the path in which gNB2 connects to gNB3 is selected as the communication path. In this case, gNB4, which is the serving base station before handover, transmits a handover request to gNB2 and gNB3 (S501). Although FIG. 5 shows an example in which the handover request is transmitted to gNB2 and gNB3 in parallel, gNB4 may transmit a handover request to gNB3, and gNB3 may transmit a handover request to gNB2, for example. Alternatively, gNB4 may transmit a handover request to gNB2, and gNB2 may transmit a handover request to gNB3. Thereafter, gNB2 and gNB3 execute Admission Control (S502), and if the handover request is accepted, a positive response is transmitted to gNB4 (S503). This positive response may also be transmitted from gNB2 to gNB3, and a positive response from gNB2 and positive response from gNB3 may be transmitted from gNB3 to gNB4. Similarly, a positive response may be transmitted from gNB3 to gNB2, and the positive response may be transferred from gNB2 to gNB4. Upon receiving positive responses from gNB2 and gNB3, gNB4 transmits a handover instruction to the terminal device (S407). Also, the serving base station is switched to gNB3, and therefore gNB4 transfers the data held in the buffer and the state of the sequence number (S504 and S505). Note that this processing is the same as conventional handover processing, and therefore the details thereof are omitted. Thereafter, the terminal device establishes a connection with gNB2 that is specified, using random access procedures (S409), and transmits a message indicating the completion of the handover to gNB2, and terminates handover processing (S410).

Through the above-described procedures, it is possible to appropriately complete handover processing executed by a terminal device in a wireless communication system that employs a relay transmission path. These procedures adhere to a conventional handover method in many parts, and therefore there is no need to make a major system modification. Also, the serving base station appropriately selects a communication path according to the handover destination, and therefore, for example, it is possible to prevent the occurrence of a situation in which the service requested by the terminal device cannot be provided, and prevent a base station device or a relay device that is in an overloaded state from being included in the communication path.

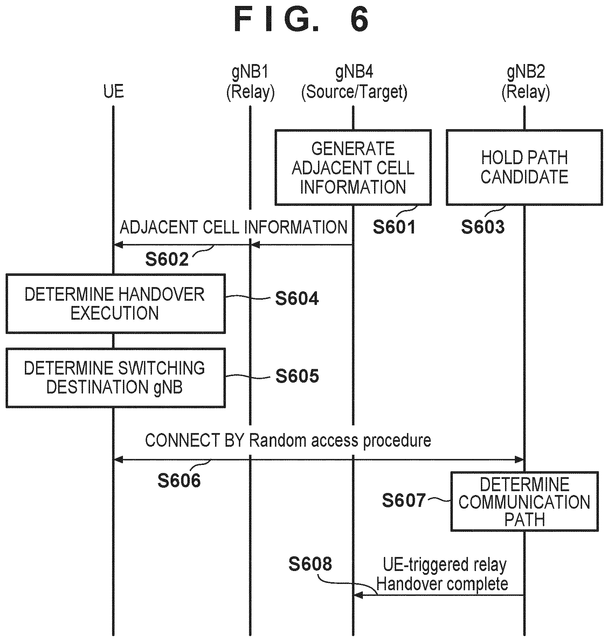

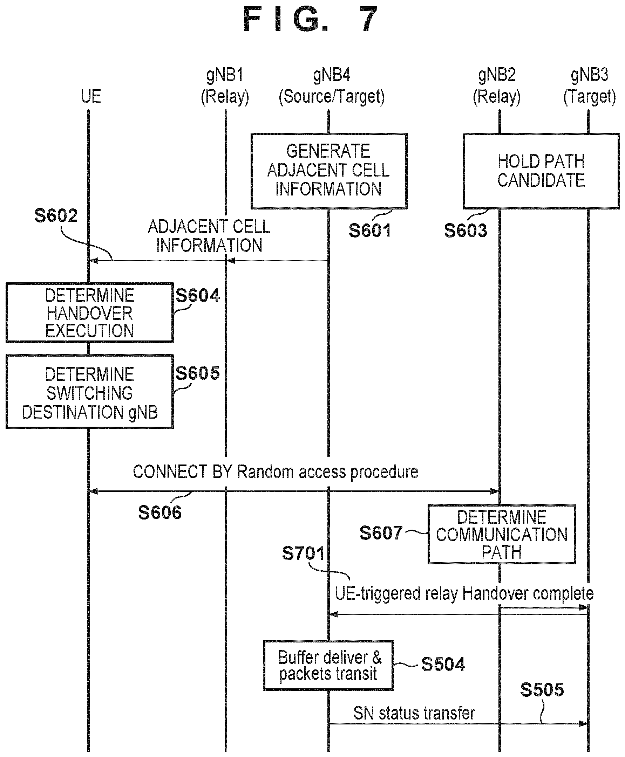

Next, an example of the flow of the processing in a case where the terminal device autonomously executes handover with reference to FIGS. 6 and 7. Note that FIG. 6 shows an example in which the communication path after handover includes a path that connects gNB2 and gNB4, and the serving base station is not changed, and FIG. 7 shows an example in which the communication path after handover is a path that connects gNB2 and gNB3, and the serving base station is switched to gNB3.

First, gNB4, which is the serving base station, generates information regarding the adjacent cells of which the terminal device that is to be provided with the service is to be notified (S601), and transmits the generated information to the terminal device (S602). This information regarding the adjacent cells is information that enables the terminal device to autonomously execute handover, and may include identification information of the cells, and information used in the procedures for connecting to the base station device (the relay device) that provides the cells, for example. Note that identification information may be the NR Cell Global ID (NCGI) of the base station device that provides the cells, for example. An NCGI is the global ID of a cell that is defined by a combination of a Public Land Mobile Network ID (PLMN ID) and an NR Cell Identity (NCI). The connection procedures are random access procedures, for example, and, in one example, information used in the connection procedures may include beam information, routing information (Tracking Area ID(TAI)), and frequency information, and so on generated by the candidate base station device. Note that gNB4 may specify a communication path so that the base station device that can provide the service requested by the terminal device serves as the serving base station, and generate information regarding the base station device (relay device) that directly connects to the terminal device in the communication path, for example. That is to say, gNB4 may be configured not to generate information regarding cells that are generated by a base station device or a relay device that is only included in a communication path in which a base station device that cannot provide the service requested by the terminal device serve as the serving base station. Thus, it is possible to prevent the terminal device from being unable to continue the service that the terminal device requested, as a result of executing handover. Note that the processing in S601 and S602 may be executed when the terminal device connects to gNB4 that serves as the serving base station.

On the other hand, the base station devices and the relay devices each hold information regarding one or more candidates for the communication path that is used when the device itself directly connects to the terminal device (S603). For example, gNB2 holds information regarding three communication paths, namely (1) gNB2 → gNB4 → the core network, (2) gNB2 → gNB3 → the core network, and (3) gNB2 → gNB3 → gNB4 → the core network. FIG. 6 illustrates as if only gNB2 executes processing to hold such information in order to simplify the illustration. However, all the base station devices and the relay devices to which the terminal device can be connected may hold such information.

Thereafter, the terminal device determines whether or not to autonomously execute handover upon the wireless quality of radio signals from gNB1 that the terminal device is currently connected degrading, for example (S604). Upon determining that handover is to be executed, the terminal device determines the base station device (relay device) that is to be the destination of handover (S605). In one example, the terminal device measures the wireless quality of radio signals from the base station devices and the relay devices in the vicinity thereof, and if the wireless quality of the adjacent cell specified in the information acquired in S602 is sufficiently higher than the wireless quality of the cell that is currently connected to the terminal device, for example, the terminal device determines that handover to the adjacent cell is to be executed. In this example, the terminal device selects gNB2 as the handover destination. Thereafter, the terminal device establishes a connection to gNB2 determined as the handover destination, using random access procedures (S606).

Upon connecting to the terminal device, gNB2 selects one communication path that is to be used for communication with the terminal device from among the communication paths held in S603 (S607). For example, gNB2 may select a communication path in which the gNB that serves as the serving base station supports the service requested by the terminal device, from among the plurality of communication paths that can be used when gNB2 directly connects to the terminal device. Alternatively, gNB2 may select a communication path in which any of the loads (e.g. the usage rate of the communication resource or computation resource) on the devices that constitute the communication path is no greater than a predetermined value, from among the plurality of communication paths that can be used when gNB2 directly connects to the terminal device. Alternatively, gNB2 may select a communication path in which any of the loads (e.g. the usage rate of the wireless resource) on the communication sections that constitute the communication path is no greater than a predetermined value. Alternatively, gNB2 may select the communication path to be used in view of another criterion. gNB2 notifies the base station devices and the relay devices included in the selected communication path of the fact that handover has been performed on the initiative of the terminal device, and switches the communication path. Note that, if switching of the communication path is denied by a base station device or a relay device included in the selected communication path, gNB2 may select another communication path and transmit a similar message.

The flow of the processing in FIG. 7 is basically the same as in FIG. 6. However, the serving base station is switched to another. Therefore, when gNB2 notifies gNB3, which is included in the selected communication path, of the fact that handover has been performed on the initiative of the terminal device, gNB3 notifies gNB4, which was the serving base station before handover, of the fact. Note that gNB2 may notify gNB4. Thus, gNB4 notifies gNB3, which serves as the serving base station after handover, of the state of data addressed to the terminal device and the sequence number stored in the buffer (S504 and S505). After receiving such a notification, gNB3 may execute processing to, for example, transmit a message for making an instruction to discard information regarding the UE (UE Context Release), to gNB4. However, this processing is the same as conventional handover, and therefore the details thereof are omitted.

The above description illustrates an example in which the relay device (gNB2) that the terminal device is directly connected to selects a communication path. However, gNB2 may notify a base station device (e.g. gNB3) that has the ability to operate as a serving base station of the fact that handover has been executed, and the base station device may select a communication path.

Through the above-described procedures, it is possible to appropriately complete handover processing executed by a terminal device in a wireless communication system that employs a relay transmission path. At this time, the terminal device autonomously executes handover. Therefore, it is possible to reduce the time from when the wireless quality degrades to when the handover is complete. Also, the serving base station removes, in advance, base station devices and relay devices that cannot provide the service requested by the terminal device, from candidates for the handover destination. Therefore, it is possible to prevent the terminal device from being able to continue the service due to the serving base station after the handover. Also, when the terminal device autonomously executes handover, a base station device or a relay device selects a communication path in view of the state of loads on the devices included in each communication path or the sections in the communication path. Therefore, it is possible to prevent overloaded base station devices or relay device from being included in the communication path, for example.

Although a typical configuration and a typical flow of processing according to the present embodiment are described above, these are merely examples, and various modifications and changes to the embodiment described in the present specification, made within the scope of the claims, are naturally included in the scope of the right of the present invention.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2018-105972 filed June 1, 2018, which is hereby incorporated by reference herein.

## Claims

1. A base station device that provides a terminal device with communication via a relay device or direct communication, **characterized in that** the base station device comprises:
selection means for selecting a communication path between the terminal device and a core network when the terminal device executes handover; and
notification means for providing a notification regarding the handover executed by the terminal device, to each of one or more devices that constitute the communication path selected by the selection means, and
a connection between the terminal device and the core network is established based on the notification, using the communication path selected by the selection means.

2. The base station device according to claim 1, **characterized by** further comprising:
transmission means for transmitting, to the terminal device, a message that includes at least information indicating a device that is to be directly connected to the terminal device in the communication path selected by the selection means.

3. The base station device according to claim 1 or 2, **characterized in that**
the base station device further comprises determination means for determining whether or not the terminal device is to execute handover, based on a result of measurement of a wireless quality of the terminal device, and
upon the determination means determining that the terminal device is to execute handover, the selection means selects the communication path.

4. The base station device according to any one of claims 1 to 3, **characterized in that**
the base station device is a serving base station for the terminal device before handover is executed.

5. The base station device according to claim 4, **characterized by** further comprising:
holding means for holding one or more candidate communication paths between the core network and a device that is directly connected to the terminal device when the terminal device executes handover.

6. The base station device according to claim 1, **characterized in that**
the selection means selects the communication path upon receiving, from the terminal device, a notification indicating that handover is to be executed.

7. The base station device according to claim 1 or 6, **characterized in that**
the base station device is a device that is directly connected to the terminal device in the communication path after handover is executed.

8. The base station device according to claim 7, **characterized by** further comprising:
holding means for holding one or more candidate communication paths between the base station device and the core network.

9. A control method that is executed by a base station device that provides a terminal device with communication via a relay device or direct communication, **characterized in that** the control method comprises:
a selection step of selecting a communication path between the terminal device and a core network when the terminal device executes handover; and
a notification step of providing a notification regarding the handover executed by the terminal device, to each of one or more devices that constitute the communication path selected in the selection step, and
a connection between the terminal device and the core network is established based on the notification, using the communication path selected in the selection step.

10. A program for causing a computer included in a base station device that provides a terminal device with communication via a relay device or direct communication, to:
select a communication path between the terminal device and a core network when the terminal device executes handover; and
provide a notification regarding the handover executed by the terminal device, to each of one or more devices that constitute the selected communication path,
**characterized in that** a connection between the terminal device and the core network is established based on the notification, using the selected communication path.
